# FASCICULE DE BREVET EUROPEEN

(11) **EP 3 077 232 B1**
(45) Date de publication et mention de la délivrance du brevet: **20.02.2019**
(21) Numéro de dépôt: 14805933.0
(22) Date de dépôt: 03.12.2014
(51) Int. Cl.: B60H 1/00

(54) **BOITIER D'ENTRÉE D'AIR POUR UN SYSTÈME DE CHAUFFAGE, VENTILATION ET/OU CLIMATISATION À FAIBLE CONTRE PRESSION**
LUFTEINLASSGEHÄUSE FÜR EINE HEIZUNGS-, BELÜFTUNGS- UND/ODER KLIMAANLAGE MIT GERINGEM GEGENDRUCK
AIR INLET CASING FOR A HEATING, VENTILATION AND/OR AIR-CONDITIONING SYSTEM WITH LOW COUNTER-PRESSURE

(30) Priorité: 04.12.2013 FR 1362061
(43) Date de publication de la demande: 12.10.2016
(73) Titulaire: Valeo Systemes Thermiques, 78320 Le Mesnil Saint Denis (FR)
(72) Inventeur: QUEINNEC, Jean-Yves, F-78990 Elancourt (FR)
(74) Mandataire: Metz, Gaëlle
(86) Numéro de dépôt international: PCT/EP2014/076336
(87) Numéro de publication internationale: WO 2015/082511

(56) Documents cités:
- DE-A1- 19 954 308
- US-A1- 2010 009 620
- US-A1- 2012 214 394
- US-B1- 6 311 763

## Description

La présente invention concerne les boîtiers d'entrée d'air alimentant en sortie un système de chauffage ventilation et/ou climatisation, comportant des moyens pour contrôler la répartition entre deux flux d'air de provenance différente.

Les systèmes de chauffage ventilation et/ou climatisation comportent des entrées d'air afin d'introduire soit de l'air en provenance de l'extérieur de l'habitacle, ou air frais, soit issu de l'intérieur de l'habitacle, ou air recyclé.

Les boîtiers d'entrée d'air disposent à cette fin de volets permettant de sélectionner le flux introduit dans le système de chauffage ventilation et/ou climatisation. Ils comprennent également des moyens de filtration assurant un traitement qualitatif de l'air introduit dans l'habitacle par le système.

Le système de chauffage ventilation et/ou climatisation peut utiliser pour entraîner l'air des groupes moto-ventilateurs ou pulseurs, à double aspiration, ou bien des groupes moto-ventilateurs doubles. Dans ce cas, le dispositif d'entrée d'air est conformé pour avoir deux sorties, alimentant chacune un pulseur, après l'admission et la filtration des flux d'air en entrée.

De plus, le système de chauffage ventilation et/ou climatisation peut avoir différentes configurations de fonctionnement, qui sont, de manière non limitative, le dégivrage des vitres, un chauffage rapide ou le maintien d'une température. Suivant ces configurations de fonctionnement, il peut être demandé d'envoyer tel ou tel flux vers l'un ou l'autre des pulseurs, ou les deux. Pour le boîtier d'entrée d'air, cela implique d'être conçu avec un ensemble relativement complexe d'entrées des flux d'air frais et d'air recyclé, et de volets de sélection vers les deux sorties qui sont en correspondance avec les pulseurs.

Par ailleurs, ces installations, notamment dans le cas des applications automobiles, doivent avoir un encombrement réduit et minimiser le nombre de composants, notamment les volets de sélection.

Pour répondre aux objectifs de fonctionnement et d'intégration avec des pulseurs coaxiaux alimentés selon deux sens opposés, il a été envisagé un boîtier d'entrée d'air avec en face d'une première ouverture supérieure d'aspiration une entrée d'air frais, une entrée d'air recyclé et un volet de sélection entre les deux flux d'air, et, à proximité d'une deuxième ouverture inférieure d'aspiration, une entrée d'air recyclée occultable. Le boîtier est par ailleurs commandé par un système qui positionne les volets contrôlant les deux entrées en fonction de la configuration de fonctionnement souhaitée.

Le document US2010/0009620, divulgue un boîtier d'entrée d'air suivant le préambule de la revendication 1. Un objectif constant dans de telles applications est de diminuer les pertes de charge dans le circuit d'air de sorte à limiter la consommation d'énergie pour faire circuler l'air. De plus, cela diminue la puissance demandée aux groupes moto-ventilateurs, ce qui permet de limiter leur taille avec un effet bénéfique sur l'encombrement.

Le type de boitier d'entrée évoqué ci-dessus, conçu pour permettre la configuration double nappe, introduit des pertes de charge significatives, soit par la présence des moyens de filtrations soit par les contraintes imposées aux ouvertures et aux formes des conduits les reliant aux pulseurs.

L'objet de la présente invention est de diminuer la contribution aux pertes de charge d'un boitier d'entrée d'air conçu pour alimenter les circuits d'air d'un système de chauffage ventilation et/ou climatisation qui doit fonctionner dans diverses configurations.

### Présentation de l'invention :

L'invention concerne un boitier d'entrée d'air destiné à alimenter en sortie, un système de chauffage, ventilation et/ou climatisation, comprenant un premier circuit, destiné à alimenter en air frais et/ou recyclé au moins un dispositif d'entrainement d'air, et un second circuit destiné à alimenter ledit système en air recyclé, caractérisé en ce que ledit boîtier comporte en outre un moyen permettant la fourniture d'un flux d'air recyclé additionnel à celui du second circuit, communiquant avec le premier circuit, ledit premier circuit étant configuré de telle sorte qu'il s'y crée une perte de charge en amont de la fourniture du flux d'air recyclé additionnel.

L'invention agit en ajoutant une arrivée d'air recyclé pour lequel la contre-pression dans le circuit global, entre le système de climatisation et l'habitacle, est faible. Le flux d'air recyclé additionnel nécessite donc moins d'énergie pour être entraîné que le flux d'air frais correspondant. L'ajout se fait soit en augmentant le débit d'air recyclé existant dans le circuit déjà prévu pour cela, soit en créant un débit d'air recyclé supplémentaire parce qu'on admet un pourcentage d'air recyclé dans l'air frais. De plus, l'air recyclé additionnel est introduit dans la partie du circuit qui n'est pas ou peu impacté par les pertes de charge, afin de préserver l'intérêt initial de la faible contre-pression.

En particulier, si un élément créant une perte de charge est interposé dans ledit premier circuit, le second circuit et le moyen destiné à fournir un flux d'air recyclé additionnel communiquent avec le premier circuit du côté destiné à alimenter ledit dispositif d'entraînement par rapport à l'élément de perte de charge.

Avantageusement, ledit premier circuit comprend une partie commune débouchant dans au moins une première partie destinée à alimenter un premier dispositif d'entrainement d'air avec une première perte de charge et au moins une deuxième partie destinée à alimenter un deuxième dispositif d'entraînement d'air avec une deuxième perte de charge supérieure à ladite première perte de charge, ledit moyen destiné à fournir un flux d'air recyclé additionnel à celui du second circuit communiquant avec ladite deuxième partie.

Autrement dit, le boîtier d'entrée d'air alimente un système de climatisation avec deux dispositifs d'entraînement d'air, chacun alimentant éventuellement une partie différente du système. Par ailleurs, l'alimentation en air recyclé par une entrée commune aux deux dispositifs d'entraînement d'air se fait avec une perte de charge plus importante pour le deuxième. L'installation du moyen fournissant un flux d'air recyclé additionnel à ce deuxième dispositif en priorité optimise l'effet de ce moyen.

Le boîtier peut comprendre un moyen de filtration dans ladite partie commune du premier circuit. Ce moyen de filtration, qui est généralement source de perte de charge, est normalement utilisé dans le circuit que doit emprunter l'air frais, venant de l'extérieur. Par contre, cette filtration n'est pas nécessairement utile pour l'air recyclé, qui provient a priori d'un air intérieur déjà filtré. La mise en oeuvre de l'invention tire parti du fait que ce moyen de filtration pourra être mis près de l'arrivée d'air frais et/ou recyclé, ce qui laisse donc un espace dans le circuit à l'intérieur du boîtier pour placer des entrées d'air recyclé en évitant cette perte de charge pour alimenter le dispositif d'entraînement d'air.

De préférence, ledit premier circuit comprend au moins une arrivée destinée à l'air frais et/ou recyclé débouchant dans ladite partie commune, ladite partie commune mettant en communication avec ladite arrivée d'air au moins une sortie destinée à alimenter ledit premier dispositif d'entraînement d'air, et au moins un canal mettant en communication ladite partie commune avec une deuxième sortie destinée à alimenter ledit deuxième dispositif d'entraînement. Ledit second circuit peut alors déboucher dans ledit canal. Il est à noter que la configuration d'embouchure dudit canal dans la partie commune est souvent une cause de perte de charge supplémentaire.

Le second circuit pourra comporter un moyen de fermeture, apte à fermer ledit canal entre une embouchure du second circuit et la première dite sortie lorsqu'il est dans une position d'ouverture laissant l'air recyclé pénétrer dans ledit boîtier pour alimenter ledit second dispositif d'entraînement.

Dans un premier mode de réalisation, ledit moyen destiné à fournir un flux d'air recyclé additionnel peut également comporter une arrivée d'air située dans ledit canal, entre l'embouchure du second circuit et ladite deuxième sortie.

Dans un deuxième mode de réalisation, l'arrivée additionnelle d'air recyclé est située dans ledit canal, de façon à se trouver de l'autre côté de l'embouchure du second circuit dans ledit canal par rapport au moyen de fermeture quand il est dans la dite position fermant ledit canal.

Selon différentes variantes de ces modes de réalisation de l'invention qui pourront être prises ensemble ou séparément :
- l'ouverture additionnelle est équipée d'un moyen apte à laisser entrer l'air par différence de pression ;
- le moyen apte à laisser entrer l'air par différence de pression est un volet libre ;
- le boîtier comprend un moyen de rappel en position dudit volet libre ;
- le moyen de rappel dudit volet libre est la gravitation ou un moyen élastique ;
- l'ouverture additionnelle est équipée d'un moyen commandé apte à laisser entrer l'air.

L'invention concerne également un boîtier de climatisation comprenant un boîtier d'entrée d'air tel que décrit précédemment.

### Description détaillée de l'invention :

La présente invention sera mieux comprise et d'autres détails, caractéristiques et avantages de la présente invention apparaîtront plus clairement à la lecture de la description qui suit, en référence aux dessins annexés sur lesquels :
La figure 1 présente une vue en perspective d'un boîtier d'entrée d'air pour alimenter un système de chauffage ventilation et/ou climatisation à double nappe.
La figure 2 présente une vue en perspective d'un premier mode de réalisation d'un boîtier d'entrée d'air selon l'invention, dans une première configuration de fonctionnement.
La figure 3 présente une vue en perspective du boîtier d'entrée d'air de la figure 2, dans une deuxième configuration de fonctionnement.
La figure 4 présente une vue en perspective d'un deuxième mode de réalisation d'un boîtier d'entrée d'air selon l'invention.
La figure 5 présente une vue en perspective d'un troisième mode de réalisation d'un boîtier d'entrée d'air selon l'invention.

En référence aux figures, l'invention concerne un boîtier d'entrée d'air intégré dans un boîtier de climatisation. Ledit boîtier comprend ici deux dispositifs d'entraînement d'air, munis d'un groupe moto-propulseur à deux roues d'entraînement d'air. Le groupe moto-propulseur et les roues d'entraînement d'air ne sont pas représentés sur les figures. Par contre, on y voit une première volute 1 supérieure entourant une des roues d'entrainement. L'air y est aspiré par une ouverture circulaire centrale supérieure 2 puis est envoyé par le conduit périphérique 3 vers un premier circuit du système de chauffage ventilation et/ou climatisation. De manière similaire, une deuxième volute 4 inférieure entoure la deuxième roue d'entrainement. L'air y est aspiré par une ouverture circulaire centrale 5 inférieure puis est envoyé par le conduit périphérique 6 vers un deuxième circuit du système de chauffage ventilation et/ou climatisation. Les ouvertures supérieure 2 et inférieure 5 sont ici coaxiales.

Le boîtier d'entrée d'air est composé, par exemple :
- D'un volume supérieur 7 placé face à l'ouverture 2 d'alimentation de la première volute 1 ;
- D'un volume inférieur 8 placé face à l'ouverture 5 d'alimentation de la deuxième volute 4 ; et
- D'un volume intermédiaire 9 contournant les deux volutes 1 et 4, et assurant la communication entre les deux volumes, supérieur et inférieur.

En outre, le boîtier comprend ici sur le volume supérieur, une ouverture 10 destinée à l'arrivée d'air frais, venant de l'extérieur du véhicule, et une ouverture 11 destinée à l'arrivée d'air recyclé, venant de l'habitacle. Sur l'exemple présenté, un volet 12, dit de mixage, glissant entre les deux ouvertures est apte à fermer complètement l'une ou l'autre. Il peut également, dans des positions intermédiaires, laisser des sections de passage sur chacune des deux ouvertures, permettant de faire varier le pourcentage d'air recyclé par rapport à l'air frais. Ce volume supérieur est de plus entièrement traversé horizontalement par un moyen de filtration 13. Ce moyen de filtration s'interpose entre les arrivées d'air frais 10 et d'air recyclé 11, situées en haut du volume supérieur 7, d'une part, et l'ouverture centrale 2 de la volute supérieure 1, débouchant sur le fond de ce volume, d'autre part. Il s'interpose également entre ces mêmes arrivées d'air et le volume 9 de communication avec la partie inférieure du boîtier. Ce moyen, conçu principalement pour filtrer l'air frais avant de l'introduire dans l'habitacle, crée une première perte de charge entre l'arrivée d'air frais 10 et les deux sorties, 2 et 4, vers les dispositifs d'entraînement d'air.

Il est à noter également que le volume intermédiaire 9 et ses raccordements aux volumes supérieur 7 et inférieur 8, ont une forme complexe. Le canal qu'il forme, avec le volume inférieur 8, pour conduire l'air ayant traversé l'élément de filtration 13 est donc une source de perte de charge supplémentaire dans le circuit alimentant le deuxième dispositif d'entraînement d'air par la sortie inférieure 5. En comparaison, le circuit d'alimentation par la sortie supérieure 2 du premier dispositif d'entraînement d'air est beaucoup plus direct.

Ce boîtier comprend encore une arrivée d'air recyclé 14 entre l'élément de filtration 13 et la sortie inférieure 5. Sur l'exemple présenté, cette arrivée d'air recyclé est située à la jonction entre le volume inférieur 8 et le volume intermédiaire 9. Dans une variante de réalisation, elle peut se trouver soit un peu plus dans le volume inférieur 8 soit dans le volume intermédiaire 9. De manière avantageuse, cette arrivée 14 est configurée pour que l'air qui en provient puisse suivre un circuit le plus direct possible, c'est-à-dire en minimisant les pertes de charge, vers la sortie inférieure 5.

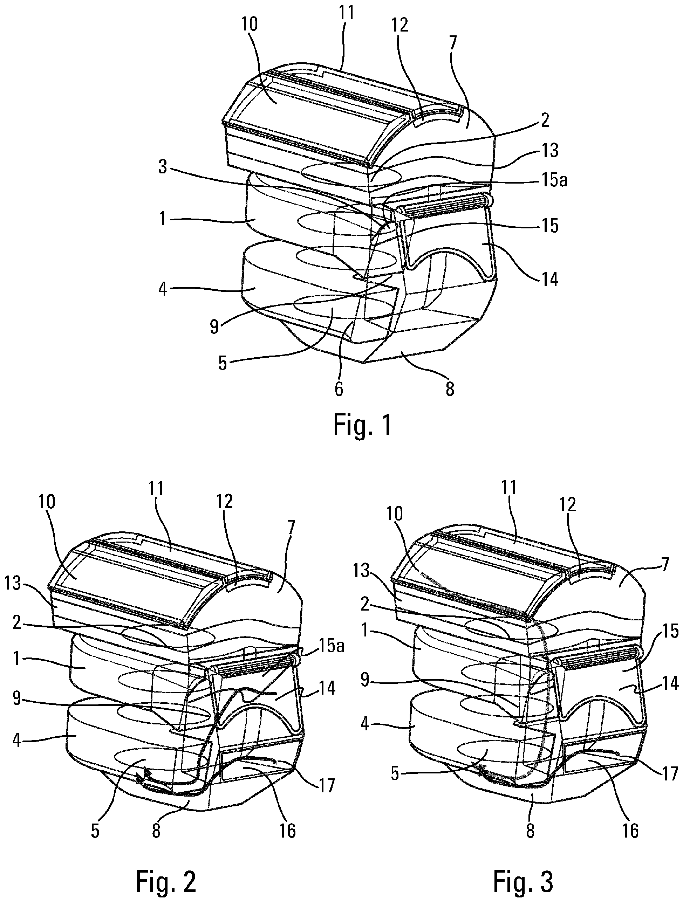

Le moyen de commande de la fermeture de cette arrivée d'air 14 est avantageusement constitué par un volet d'arrivée d'air recyclé 15, positionné contre une paroi intérieure du boîtier, en position fermée de ladite arrivée d'air recyclé 14. Il permet l'ouverture de l'arrivée d'air recyclé 14 en pivotant vers le haut autour d'un axe horizontal. Il est, de plus, configuré pour pouvoir, lors de l'ouverture de l'arrivée 14 d'air recyclé, se trouver dans une position 15a, telle que représentée sur la figure 2, qui ferme la communication entre le haut et le bas dans le volume 9 intermédiaire, en laissant ladite arrivée d'air recyclé 14 du côté de la sortie inférieure 5.

Ce boîtier est prévu pour fonctionner selon au moins trois configurations :
- Une configuration « air frais complet » : dans ce cas le volet de mixage 12 est mis dans une position fermant complètement l'arrivée 11 d'air recyclé et le volet d'arrivée d'air recyclé 15 ferme l'arrivée 14 d'air recyclé du bas et libère la communication entre le haut et le bas. Les deux volutes, 1 et 4, sont alors alimentées uniquement par l'air frais venant de l'arrivée 11. Pour atteindre la volute inférieure 4, l'air frais doit traverser le filtre 13, le canal formé par le volume intermédiaire 9 et le volume inférieur 8.
- Une configuration « air recyclé complet » : dans ce cas le volet de mixage 12 est mis dans une position fermant complètement l'arrivée 10 d'air frais et le volet d'arrivée d'air recyclé 15 est mis dans la position 15a fermant la communication entre le haut et le bas. La volute 1 est donc alimentée par l'air recyclé venant de l'arrivée 11 et traversant le filtre 13. La volute 4 inférieure est alimentée par l'air recyclé venant de l'arrivée 14. Cet air ne traverse pas de filtre dans le boîtier.
- Une configuration « double nappe » : dans ce cas le volet de mixage 12 est mis dans une position fermant complètement l'arrivée 11 d'air recyclé et le volet d'arrivée d'air recyclé 15 est mis dans la position 15a fermant la communication entre le haut et le bas. La volute 1 est donc alimentée par l'air frais venant de l'arrivée 10 et traversant le filtre 13. La volute inférieure 4 est alimentée par l'air recyclé venant de l'arrivée 14. Cet air recyclé ne traverse pas de filtre dans le boîtier.

Il existe encore une troisième configuration de fonctionnement, que l'on peut appeler « air frais mixé », dans laquelle le volet d'arrivée d'air recyclé 15 ferme l'arrivée 14 d'air recyclé du bas, comme dans la configuration « air frais complet ». Par contre, le volet de mixage 12 est mis dans une position intermédiaire, dans laquelle l'arrivée d'air frais 10 est en grande partie ouverte mais où un pourcentage d'air recyclé peut passer par l'ouverture 11. Ce mélange d'air frais et d'air recyclé suit alors le même circuit vers les sorties supérieure 2 et inférieure 5, que l'air frais dans la configuration « air frais complet ». Lorsque la configuration de fonctionnement du système de chauffage ventilation et/ou climatisation autorise l'introduction d'un pourcentage d'air recyclé dans l'air frais, cela permet de gagner en énergie d'entraînement car le circuit global de l'air recyclé, entre l'habitacle et le système, présente moins de contre-pression. Par contre, dans le boîtier de la figure 1, l'air recyclé venant de l'ouverture 11 doit traverser le moyen de filtration 13 pour atteindre les volutes supérieure 1 et inférieure 4. De plus, il suit un circuit complexe pour atteindre la volute inférieure 4. Ces pertes de charge, font perdre une partie de l'avantage que l'on a à utiliser de l'air recyclé, avec théoriquement une faible contre-pression.

Autrement dit, ledit boîtier comprend un premier et un second circuit. Le premier circuit est destiné à alimenter en air frais et/ou recyclé le ou lesdits dispositifs d'entrainement d'air, ici le premier 1 et le second 4 dispositifs d'entrainement. Par « destiné à alimenter en air frais et/ou recyclé », on entend que le premier circuit est destiné à être alimenté selon chacun des trois modes, air frais seulement, air recyclé seulement ou air frais et air recyclé mélangé, ceci de façon alternée en fonction de la configuration choisie. Il ne s'agit donc pas d'un circuit qui serait destiné à être alimenté uniquement en air frais ou uniquement en air recyclé. Ledit second circuit est destiné à alimenter ledit système en air recyclé, selon une autre voie.

Ici, ledit premier circuit est alimenté par l'arrivée d'air frais 10 et/ou par l'arrivée d'air recyclé 11. Il comprend le volume supérieur 7 et, en aval, deux branches distinctes, à savoir une première branche comprenant l'ouverture supérieure 2, par laquelle ledit premier circuit débouche dans la première volute 1, et une seconde branche comprenant le volume de communication 9 suivi du volume inférieur 8 et de l'ouverture inférieure 5, par laquelle ledit premier circuit débouche dans ladite seconde volute 4.

Le second circuit se résume quant à lui au passage d'air 14. Le second circuit constitue donc à la fois une arrivée d'air recyclé et une embouchure du second circuit, ici dans le premier circuit, plus particulièrement dans ledit volume de communication 9. Cela étant, en variante, ledit second circuit pourra s'étendre longitudinalement.

De même, ledit volume supérieur 7 ne débouche pas nécessairement dans ledit premier dispositif d'entrainement d'air par ladite ouverture supérieure 2. A titre d'exemple, un conduit s'étendant longitudinalement pourra être intercalé.

Par ailleurs, ledit premier circuit et ledit second circuit ne communiquent pas nécessairement entre eux, l'alimentation en air du ou desdits dispositifs d'entrainement par chacun desdits circuits pouvant se faire de façon indépendante, bien que cela ne soit pas illustré.

Comme illustré aux figures 2 à 5, selon l'invention, le boîtier comprend un moyen 16 destiné à fournir une arrivée d'air recyclé additionnelle à celle provenant de l'ouverture 14, du même côté que la sortie 5 destinée à alimenter la volute inférieure 4 par rapport au moyen de filtration 13.

Autrement dit, ledit moyen 16 destiné à fournir une arrivée d'air recyclé additionnelle communique avec ledit premier circuit, par exemple avec ledit volume de communication 9 ou avec ledit volume inférieur 8.

Plus précisément, dans un premier mode de réalisation représenté sur les figures 2 et 3, ce moyen d'arrivée d'air recyclé additionnelle comprend une ouverture 16 pratiquée dans la paroi du boîtier située du côté de la sortie inférieure 5 lorsque le volet commandable 15 de l'arrivée 14 est dans sa position 15a, isolant cette sortie inférieure 5 du volume supérieur 7. Par exemple, cette ouverture 16 est pratiquée dans la paroi du volume intermédiaire 9. Dans une variante, elle peut être pratiquée dans la paroi du volume inférieur 8.

Avantageusement, cette ouverture 16 est complétée par un volet 17 laissé libre en rotation. Ce volet libre 17 s'ouvre donc quand la pression à l'intérieur du boîtier est plus faible qu'à l'extérieur, typiquement lorsque l'un et/ou l'autre des dispositifs d'entraînement d'air fonctionne. Dans ce cas, c'est le poids du volet libre 17 qui sert de force de rappel.

Dans une variante, le volet libre 17 peut être équipé d'un moyen de rappel élastique. La force de ce rappel peut être adaptée pour refermer l'ouverture 16 lorsque la différence de pression passe en dessous d'un seuil déterminé ou lorsque le boîtier n'est pas dans une position verticale.

En référence à la figure 2, lorsque le boîtier est en configuration de fonctionnement « air recyclé complet » ou « double nappe », c'est-à-dire lorsque la sortie inférieure 5 est alimentée par de l'air recyclé, un flux d'air recyclé venant de l'ouverture 16 vient compléter le flux principal venant de l'ouverture 14, libérée par le volet commandable 15 en position 15a. La taille de l'ouverture 14 étant limitée par celle du volet commandable 15, placé en travers du conduit formé par le volume intermédiaire 9, on augmente ainsi le débit d'air recyclé allant vers le dispositif d'entraînement d'air alimenté par la sortie inférieure 5, et l'on maintient une contre-pression basse dans le circuit global de l'air recyclé.

Le volet libre 17 évite un éventuel reflux par l'ouverture 16 de l'air arrivant par l'ouverture 16.

En référence à la figure 3, lorsque le boîtier selon l'invention est en configuration de fonctionnement « air frais complet », la différence de pression dans le bas du boîtier par rapport à l'habitacle fait que le volet libre 17 se soulève, laissant passer par l'ouverture 16 un flux d'air recyclé additionnel. Compte tenu de la contre pression créée par le passage de l'air frais au travers du filtre 13 et du volume intermédiaire 9, le flux d'air recyclé additionnel est dirigé vers la volute inférieure 4.

Dans cette configuration de fonctionnement, appelée dans la suite « air frais mixé amélioré», la volute supérieure 1 est alimentée pratiquement entièrement par l'air frais venant de l'arrivée 10 et traversant le filtre 13. La volute inférieure 4, quant à elle, est alimentée par de l'air frais venant de l'arrivée 10 en traversant le filtre 13, mélangé à un flux d'air recyclé venant directement de l'ouverture 16 et ne circulant que dans le volume inférieur 8.

L'air recyclé utilisé dans cette configuration suit ainsi un circuit rencontrant le moins possible de contre-pression et l'on tire au maximum avantage de son utilisation pour réduire l'énergie nécessaire à l'entraînement d'air.

Les spécifications imposées par le système de chauffage ventilation et/ou climatisation peuvent nécessiter de fixer le pourcentage d'air recyclé en dessous d'une certaine valeur, par exemple 15%.

Pour cela, une première variante de l'invention limite l'écartement du volet libre 17 en mettant des butées.

Il est à noter que la configuration initiale « air frais mixé » peut aussi être utilisée avec le boîtier selon l'invention. Dans ce cas, un peu d'air recyclé venant de l'arrivée d'air recyclé 11 dans le volume supérieur 7 alimente aussi la volute supérieure 1. Cette configuration peut être utile si l'on veut alimenter les deux circuits du système de chauffage ventilation et/ou climatisation en air frais mixé.

Par ailleurs, une variante de réalisation où un dispositif commandé empêche le volet libre 17 de s'ouvrir permet encore d'utiliser le boîtier en configuration « air frais complet » si c'est nécessaire.

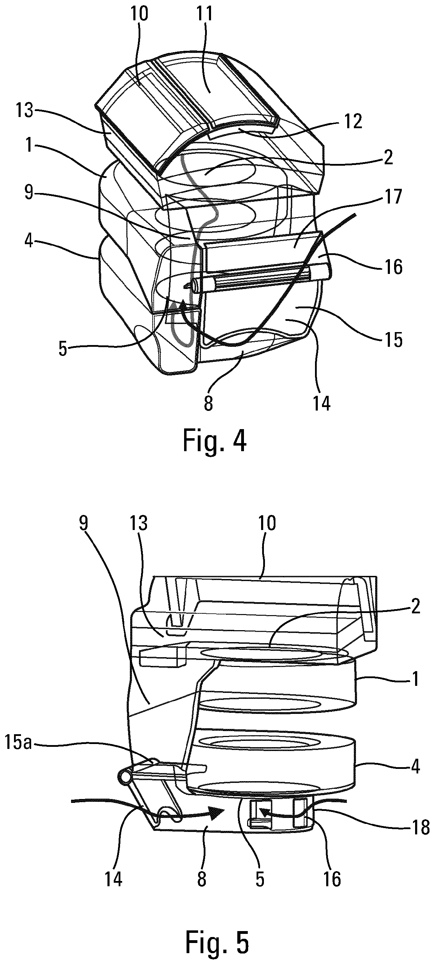

Dans un deuxième mode de réalisation, représenté sur la figure 4, l'ouverture 16 peut être pratiquée au-dessus de l'arrivée d'air recyclé 14 équipée du volet commandable 15. Lorsque cette arrivée d'air recyclé 14 est fermée, comme représentée sur la figure 4, le boîtier fonctionne comme dans la première variante, un flux d'air recyclé venant de l'ouverture 16 complète le flux d'air venant de la partie supérieure pour alimenter la sortie inférieure 5, en ne traversant pas le filtre 13.

Les mêmes variantes que dans le premier mode de réalisation concernant le volet libre 17 sont envisageables pour permettre les configurations de fonctionnement « air frais mixé amélioré », « air frais mixé » ou « air frais complet ».

Lorsque le volet commandable 15 est dans la position 15a, la communication entre l'arrivée 16 est la sortie inférieure 5 est coupée. Par contre, bien que le circuit vers la sortie supérieure 2, alimentant la volute supérieure 1, soit plus complexe, l'air recyclé venant de l'arrivée 16 peut aussi l'atteindre sans passer par le filtre 13.

Ainsi, en configuration « air recyclé complet », cette ouverture aura sensiblement le même effet par rapport au circuit allant de l'arrivée d'air recyclé supérieure 11 vers la sortie supérieure 2 que celui décrit dans le premier mode de réalisation pour le circuit allant de l'arrivée d'air recyclé inférieure 14 vers la sortie inférieure 5. L'invention augmente dans ce cas le flux d'air recyclé à faible contre-pression passant par la volute supérieure 1.

En configuration « double nappe », soit on utilise une variante de réalisation, déjà évoquée, bloquant l'ouverture du volet libre 17, soit on autorise une configuration « double nappe mixée », dans laquelle la sortie supérieure 2 alimente le dispositif d'entraînement du haut avec un mélange contenant un certain pourcentage d'air recyclé dans l'air frais.

Dans un troisième mode de réalisation, représenté sur la figure 5, le volet libre 17 est remplacé par un dispositif commandé, par exemple un boisseau tournant 18 placé devant l'ouverture additionnelle 16. Sur l'exemple présenté, l'ouverture additionnelle 16 est placée dans le volume inférieur 8 mais elle a la même position relative par rapport à l'ouverture 14 d'air recyclé équipée du volet commandable 15, dans les différents circuits d'air entre les entrées et sorties, que dans le premier mode de réalisation décrit plus haut. Ce troisième mode de réalisation a donc les mêmes configurations de fonctionnement que le premier mode de réalisation. Le fait que le boisseau tournant 18 soit commandé permet par contre de décider d'utiliser ou non l'arrivée d'air recyclé additionnelle 16, selon les régimes du ou des dispositifs d'entraînement d'air par exemple.

Ladite ouverture additionnelle 16 comprend un ou plusieurs orifices permettant une introduction radiale de l'air recyclé dans le volume inférieur 8.

Dans une variante de réalisation particulière des trois modes de réalisation décrit précédemment, où les configurations de fonctionnement « air recyclé complet » et « double nappe » ne sont pas requises par le système de chauffage ventilation et/ou climatisation, le boîtier ne présente pas de volet commandable 15 configuré pour fermer l'ouverture inférieure 14 et bloquer la communication entre les volumes supérieur 7 et inférieur 9. Dans ce cas, l'ouverture 16 permet, par exemple, l'arrivée d'un flux d'air recyclé complémentaire lorsque le régime du ou des dispositifs d'entrainement d'air correspond à un fonctionnement avec de l'air frais à plein débit, du système de chauffage de ventilation et/ou climatisation. L'invention est d'ailleurs également généralisable à un boîtier d'entrée d'air destiné à alimenter un seul dispositif d'entraînement d'air. Ledit premier circuit pourra alors avoir une configuration différente, notamment une configuration qui ne se sépare pas en deux branches.

Le dispositif qui a été décrit est utilisable dans un boîtier de climatisation. Un tel boitier comprend en particulier le groupe moto-propulseur avec les roues d'entraînement, qui se logent dans les volutes 1, 4 et le moteur entraînant ces roues, qui peut être placé, pour l'exemple présenté, dans l'espace central au milieu des deux volutes. Il comprend également les moyens de commande des volets 12, 15 sélectionnant les flux d'air en fonction des configurations de fonctionnement du système de climatisation.

En variante, non illustrée, les volutes 1, 4 pourront être séparées par une cloison commune. Le moteur est alors situé dans le prolongement axial de l'une ou l'autre des volutes, préférentiellement la volute inférieure.

D'autres configurations, avec un boîtier de climatisation placé à l'horizontal ou bien des groupes moto-ventilateurs qui ne sont pas placés en vis-à-vis, sont bien sûr envisageables avec l'invention.

## Revendications

1. Boitier d'entrée d'air destiné à alimenter en sortie, un système de chauffage, ventilation et/ou climatisation, comprenant un premier circuit, destiné à alimenter en air frais et/ou recyclé au moins un dispositif d'entrainement d'air, et un second circuit destiné à alimenter ledit système en air recyclé, **caractérisé en ce que** ledit boîtier comporte en outre un moyen (16, 17) permettant la fourniture d'un flux d'air recyclé additionnel à celui du second circuit, communiquant avec le premier circuit, ledit premier circuit étant configuré de telle sorte qu'il s'y crée une perte de charge en amont de la fourniture du flux d'air recyclé additionnel.

2. Boitier d'entrée d'air selon la revendication précédente dans lequel un élément créant une perte de charge est interposé dans ledit premier circuit, le moyen (16, 17) destiné à fournir un flux d'air recyclé additionnel communiquant avec le premier circuit du côté destiné à alimenter ledit dispositif d'entraînement par rapport à l'élément de perte de charge.

3. Boitier d'entrée d'air selon l'une des revendications précédentes dans lequel ledit premier circuit comprend une partie commune (7) débouchant dans au moins une première partie destinée à alimenter un premier dispositif d'entrainement d'air avec une première perte de charge et au moins une deuxième partie (9 ,8, 5) destinée à alimenter un deuxième dispositif d'entraînement d'air avec une deuxième perte de charge supérieure à ladite première perte de charge, ledit moyen destiné (16, 17) à fournir un flux d'air recyclé additionnel à celui du second circuit communiquant avec ladite deuxième partie.

4. Boîtier d'entrée d'air selon la revendication précédente comprenant un moyen de filtration (13) dans ladite partie commune du premier circuit.

5. Boîtier d'entrée d'air selon l'une des revendications 3 ou 4 dans lequel ledit premier circuit comprend au moins une arrivée (10) destinée à l'air frais et/ou recyclé débouchant dans ladite partie commune (7), ladite partie commune (7) mettant en communication avec ladite arrivée d'air (10) au moins une sortie (2), dite première sortie, destinée à alimenter ledit premier dispositif d'entraînement d'air, et au moins un canal (9,8) mettant en communication ladite partie commune (7) avec une deuxième sortie (5) destinée à alimenter ledit deuxième dispositif d'entraînement, ledit second circuit débouchant dans ledit canal (9,8).

6. Boîtier d'entrée d'air selon la revendication précédente comprenant un moyen de fermeture (15) du second circuit, apte à fermer ledit canal (9) entre une embouchure (14) du second circuit dans ledit canal (9) et ladite première sortie (2) lorsqu'il est dans une position d'ouverture (15a) laissant l'air recyclé pénétrer dans ledit boîtier pour alimenter ledit second dispositif d'entraînement.

7. Boitier d'entrée d'air selon l'une des revendications 5 ou 6 dans lequel le moyen destiné à fournir un flux d'air recyclé additionnel comporte une arrivée d'air (16) située dans ledit canal (9,8), entre une embouchure (14) du second circuit dans ledit canal et ladite deuxième sortie (5).

8. Boitier d'entrée d'air selon la revendication 6 dans lequel le moyen destiné à fournir un flux d'air recyclé additionnel comporte une arrivée d'air (16) située dans ledit canal (9,8), de façon à se trouver de l'autre côté de l'embouchure (14) du second circuit par rapport au moyen de fermeture quand ledit moyen de fermeture est dans la position (15a) fermant ledit canal (9,8)

9. Boitier d'entrée d'air selon l'une des revendications précédentes dans lequel l'ouverture additionnelle (16) est équipée d'un moyen (17) apte à laisser entrer l'air par différence de pression.

10. Boitier d'entrée d'air selon la revendication précédente dans lequel le moyen apte à laisser entrer l'air par différence de pression est un volet libre (17).

11. Boîtier d'entrée d'air selon la revendication précédente dans lequel l'ouverture dudit volet libre (17) est limitée en amplitude par un moyen de butée.

12. Boîtier d'entrée d'air selon l'une des revendications 10 ou 11 comprenant un moyen de rappel en position dudit volet libre.

13. Boîtier d'entrée d'air selon la revendication précédente dans lequel le moyen de rappel dudit volet libre (17) est la gravitation ou un moyen élastique.

14. Boitier d'entrée d'air selon l'une des revendications 1 à 8 dans lequel l'ouverture additionnelle (16) est équipée d'un moyen commandé (18) apte à laisser entrer l'air.

15. Boîtier de climatisation comprenant un boîtier d'entrée d'air selon l'une quelconque des revendications précédentes.

## Patentansprüche

1. Lufteinlassgehäuse, welches dazu bestimmt ist, am Ausgang eine Heizungs-, Belüftungs- und/oder Klimaanlage zu versorgen, die einen ersten Kreislauf, der dazu bestimmt ist, wenigstens eine Luftfördervorrichtung mit Frischluft und/oder Umluft zu versorgen, und einen zweiten Kreislauf, der dazu bestimmt ist, die Anlage mit Umluft zu versorgen, umfasst, **dadurch gekennzeichnet, dass** das Gehäuse außerdem ein Mittel (16, 17) aufweist, das die Zuführung eines zusätzlichen Umluftstroms zu demjenigen des zweiten Kreislaufs ermöglicht und das mit dem ersten Kreislauf in Verbindung steht, wobei der erste Kreislauf derart ausgebildet ist, dass ein Druckabfall stromaufwärts der Zuführung des zusätzlichen Umluftstroms erzeugt wird.

2. Lufteinlassgehäuse nach dem vorhergehenden Anspruch, wobei ein Element, das einen Druckabfall erzeugt, im ersten Kreislauf eingefügt ist, wobei das Mittel (16, 17), das dazu bestimmt ist, einen zusätzlichen Umluftstrom zuzuführen, mit dem ersten Kreislauf auf der Seite, bezogen auf das Druckabfallelement, in Verbindung steht, die dazu bestimmt ist, die Fördervorrichtung zu versorgen.

3. Lufteinlassgehäuse nach einem der vorhergehenden Ansprüche, wobei der erste Kreislauf einen gemeinsamen Teil (7) umfasst, der in wenigstens einen ersten Teil mündet, der dazu bestimmt ist, eine erste Luftfördervorrichtung mit einem ersten Druckabfall zu versorgen, und wenigstens einen zweiten Teil (9, 8, 5), der dazu bestimmt ist, eine zweite Luftfördervorrichtung mit einem zweiten Druckabfall, der größer als der erste Druckabfall ist, zu versorgen, wobei das Mittel (16, 17), das dazu bestimmt ist, einen zusätzlichen Umluftstrom zu demjenigen des zweiten Kreislaufs zuzuführen, mit dem zweiten Teil in Verbindung steht.

4. Lufteinlassgehäuse nach dem vorhergehenden Anspruch, welches ein Filtermittel (13) in dem gemeinsamen Teil des ersten Kreislaufs umfasst.

5. Lufteinlassgehäuse nach einem der Ansprüche 3 oder 4, wobei der erste Kreislauf umfasst: wenigstens einen für die Frischluft und/oder Umluft bestimmten Einlass (10), der in den gemeinsamen Teil (7) mündet, wobei der gemeinsame Teil (7) mit dem Lufteinlass (10) wenigstens einen Auslass (2), erster Auslass genannt, in Verbindung bringt, der dazu bestimmt ist, die erste Luftfördervorrichtung zu versorgen, und wenigstens einen Kanal (9, 8), der den gemeinsamen Teil (7) mit einem zweiten Auslass (5) in Verbindung bringt, , der dazu bestimmt ist, die zweite Luftfördervorrichtung zu versorgen, wobei der zweite Kreislauf in den Kanal (9, 8) mündet.

6. Lufteinlassgehäuse nach dem vorhergehenden Anspruch, welches ein Mittel zum Schließen (15) des zweiten Kreislaufs umfasst, das geeignet ist, den Kanal (9) zwischen einer Mündung (14) des zweiten Kreislaufs in den Kanal (9) und dem ersten Auslass (2) zu schließen, wenn er sich in einer Öffnungsposition (15a) befindet, welche die Umluft in das Gehäuse eintreten lässt, um die zweite Fördervorrichtung zu versorgen.

7. Lufteinlassgehäuse nach einem der Ansprüche 5 oder 6, wobei das Mittel, das dazu bestimmt ist, einen zusätzlichen Umluftstrom zuzuführen, einen Lufteinlass (16) aufweist, der in dem Kanal (9, 8) zwischen einer Mündung (14) des zweiten Kreislaufs in den Kanal und dem zweiten Auslass (5) angeordnet ist.

8. Lufteinlassgehäuse nach Anspruch 6, wobei das Mittel, das dazu bestimmt ist, einen zusätzlichen Umluftstrom zuzuführen, einen Lufteinlass (16) aufweist, der in dem Kanal (9, 8) so angeordnet ist, dass er sich, bezogen auf das Schließmittel, wenn sich das Schließmittel in der den Kanal (9, 8) schließenden Position (15a) befindet, auf der anderen Seite der Mündung (14) des zweiten Kreislaufs befindet.

9. Lufteinlassgehäuse nach einem der vorhergehenden Ansprüche, wobei die zusätzliche Öffnung (16) mit einem Mittel (17) ausgestattet ist, das geeignet ist, die Luft durch eine Druckdifferenz eintreten zu lassen.

10. Lufteinlassgehäuse nach dem vorhergehenden Anspruch, wobei das Mittel, das geeignet ist, die Luft durch eine Druckdifferenz eintreten zu lassen, eine freie Klappe (17) ist.

11. Lufteinlassgehäuse nach dem vorhergehenden Anspruch, wobei die Öffnung der freien Klappe (17) durch ein Anschlagmittel in der Amplitude begrenzt ist.

12. Lufteinlassgehäuse nach einem der Ansprüche 10 oder 11, welches ein Mittel zur Rückholung der freien Klappe in ihre Position umfasst.

13. Lufteinlassgehäuse nach dem vorhergehenden Anspruch, wobei das Mittel zur Rückholung der freien Klappe (17) die Schwerkraft oder ein elastisches Mittel ist.

14. Lufteinlassgehäuse nach einem der Ansprüche 1 bis 8, wobei die zusätzliche Öffnung (16) mit einem Steuerungsmittel (18) ausgestattet ist, das geeignet ist, die Luft eintreten zu lassen.

15. Klimatisierungsgehäuse, welches ein Lufteinlassgehäuse nach einem der vorhergehenden Ansprüche umfasst.

## Claims

1. Air inlet casing intended to supply, at the outlet thereof, a heating, ventilation and/or air-conditioning system, comprising a first circuit, intended to supply fresh and/or recycled air to at least one air delivery device, and a second circuit intended to supply said system with recycled air, **characterized in that** said casing further comprises a means (16, 17) enabling the provision of an additional flow of recycled air to that supplied by the second circuit, communicating with the first circuit, said first circuit being configured in such a way that a pressure drop upstream of the provision of the additional flow of recycled air is created therein.

2. Air inlet casing according to the preceding claim, in which an element creating a pressure drop is interposed in said first circuit, the means (16, 17) intended to provide an additional flow of recycled air communicating with the first circuit on the side intended to supply said delivery device, with respect to the pressure drop element.

3. Air inlet casing according to either of the preceding claims, in which said first circuit includes a common part (7) opening into at least one first part intended to supply a first air delivery device with a first pressure drop, and at least one second part (9, 8, 5) intended to supply a second air delivery device with a second pressure drop greater than said first pressure drop, said means (16, 17) intended to provide an additional flow of recycled air to that supplied by the second circuit communicating with said second part.

4. Air inlet casing according to the preceding claim, including a filtration means (13) in said common part of the first circuit.

5. Air inlet casing according to Claim 3 or 4, in which said first circuit includes at least one intake (10) intended for fresh and/or recycled air, said intake opening into said common part (7), said common part (7) providing communication between said air intake (10) and at least one outlet (2), referred to as a first outlet, intended to supply said first air delivery device, and at least one duct (9, 8) providing communication between said common part (7) and a second outlet (5) intended to supply said second delivery device, said second circuit opening into said duct (9, 8) .

6. Air inlet casing according to the preceding claim, including a closure means (15) for closing the second circuit, capable of closing said duct (9) between a mouth (14) of the second circuit in said duct (9) and said first outlet (2) when said closure means is in an open position (15a) allowing recycled air to penetrate into said casing in order to supply said second delivery device.

7. Air inlet casing according to Claim 5 or 6, in which the means intended to provide an additional flow of recycled air comprises an air intake (16) located in said duct (9, 8), between a mouth (14) of the second circuit in said duct and said second outlet (5).

8. Air inlet casing according to Claim 6, in which the means intended to provide an additional flow of recycled air comprises an air intake (16) located in said duct (9, 8), in such a way as to be positioned on the other side of the mouth (14) of the second circuit with respect to the closure means, when said closure means is in the position (15a) closing said duct (9, 8) .

9. Air inlet casing according to one of the preceding claims, in which the additional opening (16) is equipped with a means (17) capable of allowing air to enter by a difference in pressure.

10. Air inlet casing according to the preceding claim, in which the means capable of allowing air to enter by a difference in pressure is a free flap (17).

11. Air inlet casing according to the preceding claim, in which the opening of said free flap (17) is limited in terms of range by a stop means.

12. Air inlet casing according to Claim 10 or 11, including a means for restoring the position of said free flap.

13. Air inlet casing according to the preceding claim, in which the means for restoring said free flap (17) is gravitation or an elastic means.

14. Air inlet casing according to one of Claims 1 to 8, in which the additional opening (16) is equipped with a controlled means (18) capable of allowing air to enter.

15. Air-conditioning casing including an air inlet casing according to any one of the preceding claims.
